# EUROPEAN PATENT SPECIFICATION

(11) **EP 2 168 422 B1**
(45) Date of publication and mention of the grant of the patent: **12.10.2011**
(21) Application number: 09160689.7
(22) Date of filing: 19.05.2009
(51) Int. Cl.: A01D 46/26

(54) **Tree shaking device used to harvest hanging fruits.**
Baumschüttelvorrichtung zum Ernten von hängenden Früchten
Dispositif pour secouer les arbres destiné à la récolte des fruits qui pendent

(30) Priority: 29.09.2008 IT MC20080027 U
(43) Date of publication of application: 31.03.2010
(73) Proprietor: F.LLI Berardinucci S.R.L., 66030 Arielli (CH) (IT)
(72) Inventor: Berardinucci, Vincenzo, 66014 Crecchio (CH) (IT)
(74) Representative: Baldi, Claudio

(56) References cited:
- WO-A2-2009/060115
- ES-A1- 8 700 896
- FR-A1- 2 579 062
- US-A- 5 765 349

## Description

The present patent application relates to a tree shaking device used to harvest hanging fruits, (see e.g. US-A-5 765 349, which discloses a tree shaking device according to the preamble of claim 1).

As it is known, one of the most popular techniques used to harvest olives and other hanging fruits consists in shaking trees energetically to make fruits detach from trees and fall onto the ground.

Numerous mechanical devices have been designed to carry out this function, being characterised by different structural configurations and different levels of functional efficacy.

The said technology also includes tree shaking devices designed to be fitted at the back of agricultural tractors as an interchangeable accessory.

Each tree shaking device is provided with a large box-shaped frame with horizontal development, with two large arms mounted at the sides of the frame, facing the front of the frame itself.

According to the practical use of the said device, the tractor is driven close to the tree to be shaken until the front border of the box-shaped frame is positioned against the tree trunk. Then the two arms are tightened, using traditional actuators provided on the said device.

Once the trunk is tightened between the two arms and the front border of the box-shaped frame of the device, the tree shaking operation can start efficaciously.

The said result is achieved by operating an additional actuator designed to drive into alternate rotations a heavy eccentric body with vertical axis contained inside the same box-shaped frame with the two arms pivoted at the sides.

The alternate rotations of the eccentric body create strong horizontal vibrations (i.e. "undulatory" vibrations) of the device and energetically shake the trunk that is joined with the device in view of the tightening provided by the said arms.

In order to avoid that the vibrations produced by a similar device are excessively transmitted to the tractor that supports the device, the box-shaped frame is hung to the bar used to fix it to the tractor, with the interposition of a series of springs or other elastic or flexible elements (such as chains or cables) that are used to absorb the majority of vibrations.

Regardless of its popularity, this type of tree shaking devices has shown significant functional drawbacks that are determined, in particular, by the fact that the tightening arms rotate around fixed pivots.

Because of the above, the tightening arms are able to provide efficacious tightening only on condition that the diameter of the trunk is included within a limited range.

It has been noted that the tightening of the trunk can be considered satisfactory when the two arms and the front border of the box-shaped frame of the tree shaking device (which, as mentioned above, cooperates for tightening) are arranged around the basically circular circumference of the trunk with a basically regular angular interval.

Such a condition can be actually obtained only with some specific sizes of trunks, and not with trunks having a higher or lower diameter than the aforementioned ideal sizes.

For instance, if the trunk is especially thin, the two arms are tightened in such a way that their prehensile ends are arranged one on top of the other in the same portion of the trunk circumference.

In a similar situation tightening is no longer a three-point tightening, but a two-point tightening, in which the prehensile ends of the two arms interfere with the trunk in exactly opposite position with respect to the point in which the trunk interferes with the front border of the box-shaped frame of the tree shaking device.

As explained above, the tree shaking devices described above are impaired by poor versatility, since they cannot adjust to trunks with different diameters.

Because of this, users who have trees with very different diameters in their fields are forced to purchase different versions of the said tree shaking devices (with different tightening width of the arms) or at least a series of arms with different sizes and install them from time to time according to the specific circumference of the tree to be shaken.

Moreover, the aforementioned actuation modes of the arms with fixed pivot very often cause considerable damage to the trees to be tightened (especially in case of trunks with larger diameter) because of the traumatic removal of large pieces of bark.

The purpose of the present invention is to devise a new tree shaking device that, although inspired by the general configuration of the aforementioned tree shaking devices, is not characterised by the foregoing functional limitations.

In fact, the device of the present invention is able to adjust to trunks with any diameter with equal efficacy, while perfectly respecting the integrity of the external structure of the trunks to be shaken because of the innovative interference mode of the tightening arms.

The inventive solution that has permitted to achieve the said purposes consists in providing the device of the invention with a pair of arms that no longer rotate around a fixed pivot and are therefore able to move one against the other during tightening, while maintaining a basically parallel mutual position.

Regardless of the diameter of the trunk to be tightened, this guarantees that the two arms always interfere with different trunks with a basically identical angle, which is particularly efficacious since it always ensures the three-point tightening that is the most efficacious tightening mode from a functional viewpoint and the most respectful tightening mode for the integrity of the tree.

Another advantageous characteristic of the device of the invention is represented by the practicalness of the possible variation of the arm geometry.

As mentioned above, in traditional tree shaking devices such an adjustment is only possible on condition that the tightening arms are replaced completely.

On the contrary, according to the device of the invention, it is possible to replace only the prehensile ends (or jaws) of the tightening arms without removing the arms completely.

In particular, the interchangeability of the jaws allows for varying the angle of attack of the jaws with respect to the trunks to be tightened (without impairing the basically parallel movement of the arms) or achieving a basically perimeter tightening of the trunks.

As better explained below, this result can be obtained by installing an articulated version of the jaws that comprises two consecutive sections, each of them being capable of interfering with the trunk to be tightened with a specific angle of attack.

For purposes of clarity, the description of the invention continues with reference to the enclosed drawings, which are intended for purposes of illustration only and not in a limiting sense, wherein:
- figure 1 is a general axonometric view of the device of the invention;
- figure 2 is a diagrammatic top view that illustrates the structure and actuation modes of the pair of tightening arms provided in the device of the invention;
- figure 3 is the same as fig. 2 except in that it illustrates the actuation modes of the tightening arms on a trunk with small diameter;
- figure 4 is the same as fig. 2, except in that it illustrates the presence of a different version of jaws on the tightening arms;
- figure 5 is the same as fig. 2, except in that it illustrates the presence of articulated jaws on the tightening arms.

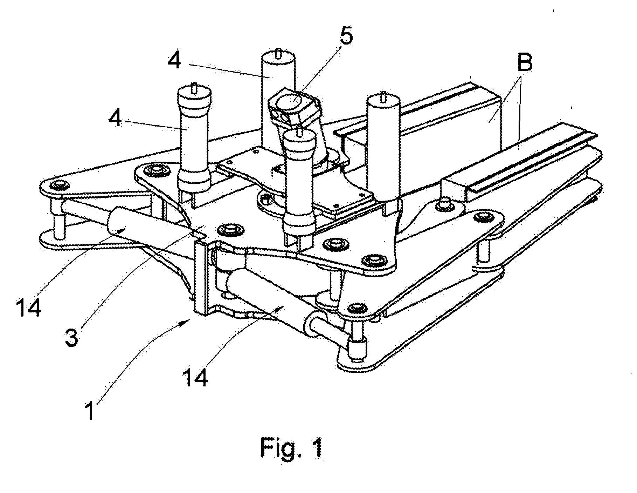

With reference to fig. 1 the tree shaking device of the invention (1) is provided, in general terms, with a basically traditional structure hung to a rod fitted on the back of a tractor.

In particular, the device (1) is composed of a box-shaped frame with horizontal development (3) that is hung to the said rod with the interposition of a series of supports (4) with elastic shock-absorbing properties.

Above the box-shaped frame (3) a hydraulic motor (5) is fixed vertically to drive into inverse rotations an eccentric body in lower position (not shown in fig. 1) that is housed inside the box-shaped frame (3) and generates undulatory vibrations that cause the shaking of the tree to make hanging fruits fall.

As shown in the following figures, the front border of the box-shaped frame (3) is provided with a plate (3a) designed to interfere with a point of the tree trunk, further to the forward movement of the tractor that supports the device of the invention (1).

Two tightening arms (B) are pivoted in symmetrically opposite position at the sides of the box-shaped frame (3) in such a way to considerably protrude on the front, being designed to interfere at the two sides with the trunk of the tree to be shaken in combination with the front plate (3a) of the frame (3).

As mentioned above, the main peculiarities of the device of the invention (1) refer to the structural configuration and operation mode of the pair of arms (B).

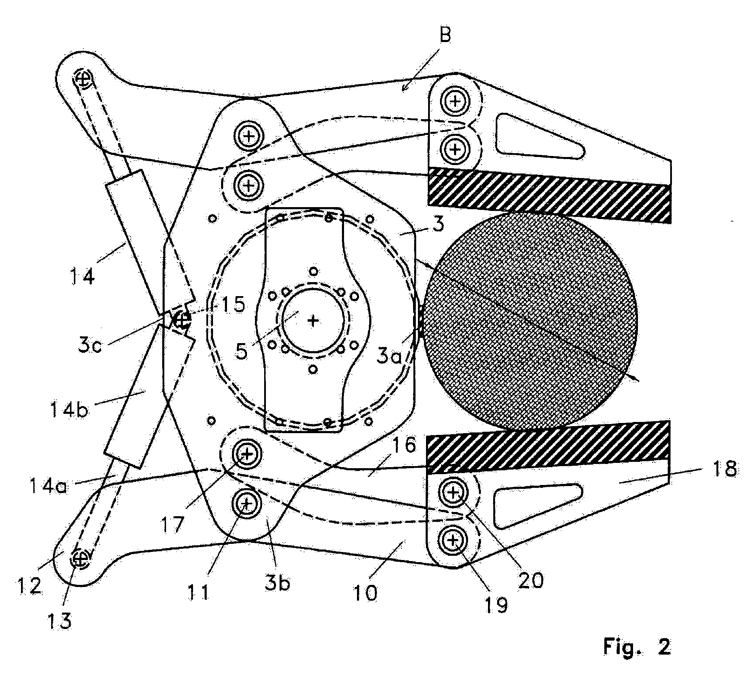

With reference to fig. 2, each arm (B) comprises a lever (10) that is pivoted at approximately half of its length, with respect to a pin with vertical axis (11), with a suitable appendix (3b) that protrudes from one side of the box-shaped frame (3).

The lever (10) is provided on the back with an outward-facing ear (12) where the stem (14a) of a hydraulic jack (14) is pivoted, with respect to a pin with vertical axis (13a), whose sleeve (14b) is pivoted, with respect to a pin with vertical axis (15), on the central line of the rear border (3c) of the box-shaped frame (3).

Considering that the two arms (B) are in symmetrically opposite position, the sleeves (14b) of the corresponding jacks are pivoted with the said pin with vertical axis (15).

A second, shorter lever (16) actuates in internal position with respect to the first lever (10) at a slightly lower height, being provided with curved profile with concavity facing the centre of the box-shaped frame (3).

The rear end of the second lever (16) is pivoted, with respect to a pin with vertical axis (17), at the same lateral appendix (3b) of the box-shaped frame (3) on which the first lever (10) is pivoted, although the pivoting point of the second lever (16) is more internal than the pivoting point of the first lever (10).

Moreover, it must be noted that the point in which the second lever (16) is pivoted with the ear (3b) is perfectly side-by-side with the point in which the central pivoting pin (11) of the first lever (10) operates, and the front ends of the same levers (10, 16) are perfectly side-by-side.

The mutual position of the two levers (10, 16) is such that the first lever (10) partially overlaps the second lever (16), in such a way to "cover" the convex outward-facing border of the second lever (16) for almost the entire length.

The additional part of each arm (B) of the tree shaking device (1) consists in a jaw (18) pivoted at the front side-by-side ends of the two levers (10, 16) by means of corresponding pins with vertical axis (19, 20).

In order to illustrate the operation modes of the arms (B) of the invention (1), it must be noted that the jaws (18) are induced to interfere energetically with the trunk to be tightened when the stems (14a) of the jacks (14) associated with the first levers (10) are ejected.

On the other hand, the inward rotation of the two first levers (10) generates the identical simultaneous rotation of the second levers (16) in view of the fact each first lever (10) is coupled with the second lever (16) since the front ends are pivoted with the same jaw (18) that also acts a mutual connection means.

To better explain the peculiarity of the device of the invention (1) it must be noted that each arm (B) is provided with articulated structure - obtained through the cooperation of the two side-by-side levers (10, 16) and the jaw (18) - while in the prior devices each arm was simply composed of a rigid lever provided with a front end shaped according to the tightening requirements of the trunk.

Because of this difference, the arms of the prior devices only had one fixed pivoting point, while each arm (B) of the device of the invention (1) has a double fixed pivoting point (that coincides with pins 11, 17) for the side-by-side pair of levers (10, 16) and a double mobile pivoting point (that coincides with pins 19, 20) for the jaw (18).

According to the said structural configuration, the "first lever(10)-second lever(16)- jaw(18)" assembly of each arm (B) operates as an expanding parallelogram during the inward rotation imposed by the actuation of the corresponding hydraulic jack.

This specific provision ensures that the jaws (18) provided in the device of the invention can make an inward travel until they interfere with the trunk positioned between them, while maintaining a basically parallel position.

Because of this, regardless of the diameter of the trunk to be tightened, the jaws (18) are able to interfere at the sides of the trunk always with the same ideal angle of attack, thus simultaneously ensuring efficacious tightening and superficial integrity of the trunk.

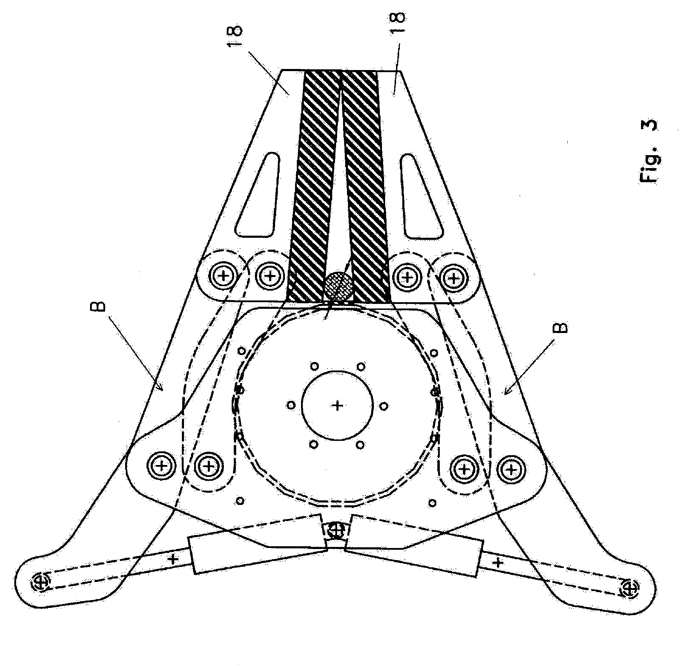

To confirm the foregoing statement, reference is made to the combined comparison of figures 2 and 3, which demonstrate that the jaws (18) of the tightening arms (B) always maintain the same position and use the same operation mode at the sides of a trunk, regardless of the trunk diameter.

Undoubtedly, this condition is completely different from the one produced when tightening the arms of the existing devices that - in view of the provision of a single fixed pivoting point tend to close as "scissors" towards the trunk, thus interfering with the trunk with angle of attacks that are from time to time determined by the trunk diameter and often cause considerable damage to the superficial integrity of the tree.

Within such an inventive idea, it is possible to provide the arms (B) of the device of the invention (1) with jaws (18) having a different profile on the internal side, i.e. the side designed to interfere with the trunk.

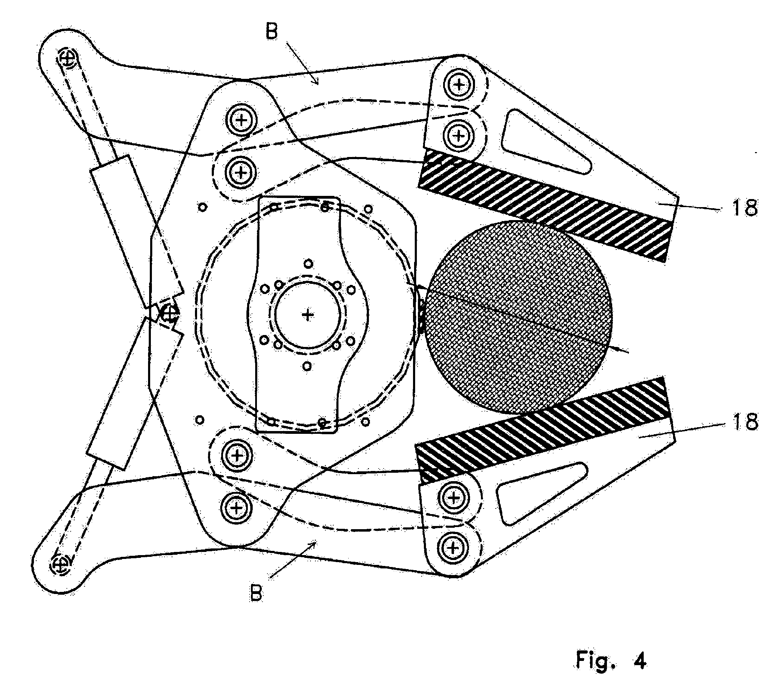

In this way, each different profile corresponds to a different angle of attack with respect to the trunk to be tightened, as clearly demonstrated by a comparison between figure 2 and figure 4.

Regardless of the different inclination of the internal surface of the various versions of jaws, it is understood that the jaws are in any case able to rotate towards the trunk to be tightened while still maintaining the parallel position that is the main technical-functional peculiarity of the device of the invention (1).

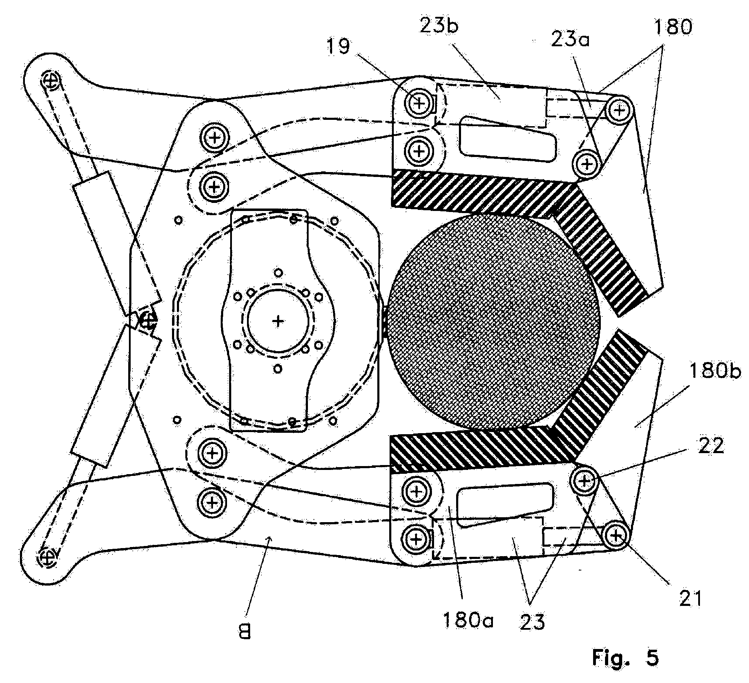

As shown in fig. 5, an additional version of jaws (180) can be mounted on the arms of the device of the invention (1).

They are articulated jaws composed of two separate sections (180a, 180b) that are mutually pivoted by means of the interposition of a suitable pair of pins with vertical axis (21, 22).

Upon tightening the arms (B), interference of the first section (180a) of the articulated jaws (180) against the lateral surface of the trunk to be tightened is produced (according to the same operation modes illustrated for the jaws (18) without articulation); then, the second section (180b) of the jaws rotates inwards by approximately 90° until it basically interferes with the front area of the trunk.

Such a tightening is especially efficacious because the trunk is surrounded by the four sections of the two articulated jaws (180) on three sides (two lateral sides and the front side).

Finally, it must be noted that the inward rotation of the second section (180b) of each articulated jaw (180) is favoured by a hydraulic jack (23) longitudinally housed inside the first section (180a) of the jaw (180).

In particular, the sleeve (23b) of the hydraulic jack (23) is pivoted with the first section (180a) of the jaw (180), preferably on the pin with vertical axis (19).

Furthermore, the stem (23a) of the hydraulic jack (23) is pivoted with the second section (180b) of the jaw (180), preferably on the pin with vertical axis (21).

## Claims

1. Tree shaking device used to harvest hanging fruits, of the type comprising a box-shaped frame (3) horizontally supported by shock-absorbing supports (4), on which an actuator (5) is fixed to drive into rotation an eccentric body in lower position housed inside the box-shaped frame (3), which is also provided with a plate (3a) in the centre of the front border, and with tightening arms (B) in symmetrically opposite position at the two sides, being designed to interfere energetically from basically opposite sides with the trunk of a tree positioned against the front plate (3a), following to the activation of hydraulic jacks (14) pivoted at the box-shaped frame (3), device **characterised in that** each arm (B) comprises: - a first lever (10) pivoted at approximately half of its length, with respect to a pin with vertical axis (11), on one side of the box-shaped frame (3), which is additionally pivoted at the rear end, with respect to a pin with vertical axis (13), with the stem (14a) of a hydraulic jack (14), whose sleeve (14b) is pivoted, with respect to a pin with vertical axis (15), on the rear border (3c) of the box-shaped frame (3);
- a second lever (16) side-by-side to the first lever (10), whose rear end is pivoted, with respect with a pin with vertical axis (17), in a point of the box-shaped frame (3) aligned with the point in which the central pivoting pin (11) of the first lever (10) operates, it being also provided that the length of the second lever (16) is such that the front end is perfectly aligned with the front end of the first lever (10);
- a jaw (18) pivoted behind the front ends of the two side-by-side levers (10, 16) by means of corresponding pins with vertical axis (19, 20) that are basically aligned side-by-side.

2. Tree shaking device as claimed in claim 1, **characterised in that** the second lever (16) of each arm (B) is in more internal position with respect to the centre of the box-shaped frame (3), at a slightly lower height than the adjacent first lever (10).

3. Tree shaking device as claimed in claim 2, **characterised in that** the second lever (16) of each arm (B) is partially "covered" by the first lever (10).

4. Tree shaking device as claimed in claim 2, **characterised in that** the second lever (16) of each arm (B) has a curved profile with concavity facing the centre of the box-shaped frame (3).

5. Tree shaking device as claimed in claim 1, **characterised in that** the pivoting pin (11) of the first lever (10) and the pivoting pin (17) of the second lever (16) are fitted at an appendix (3b) that protrudes from the corresponding side of the box-shaped frame (3).

6. Tree shaking device as claimed in claim 1, **characterised in that** the pin (13) used to pivot the stem (14a) of the jack (14) in each first lever (10) is fitted at an ear (12) that protrudes externally, obtained on the rear end of the first lever (10).

7. Tree shaking device as claimed in claim 1, **characterised in that** the sleeves of the two jacks (14) are pivoted with the same pin with vertical axis (15).

8. Tree shaking device as claimed in any or more of the above claims, **characterised in that** each arm (B) is provided with articulated structure, composed of a first section (180a) pivoted behind the front ends of the two levers (10, 16) by means of corresponding pins with vertical axis (11, 17), and a second section (180a) pivoted in front of the first one by means of corresponding pins with vertical axis (21, 22), with possibility of rotating inwards by approximately 90° following to the actuation of a hydraulic jack (23) positioned between the first (180a) and the second (180b) section of the articulated jaw (180).

9. Tree shaking device as claimed in claim 8, **characterised in that** the sleeve (23b) of the hydraulic jack (23) is pivoted with the first section (180a) of the jaw (180) on the pin with vertical axis (19) and the stem (23a) is pivoted with the second section (180b) of the jaw (180) on the pin with vertical axis (21).

## Patentansprüche

1. Vorrichtung zum Schütteln von Bäumen für das Ernten von herabhängenden Früchten, umfassend ein kastenförmiges Gestell (3), das horizontal von Dämpfungshalterungen (4) getragen wird und über dem ein Aktuator (5) befestigt ist, der dazu bestimmt ist, einen darunter befindlichen, exzentrischen Körper in Drehung zu versetzen, der im Innern des kastenförmigen Gestells (3) untergebracht ist, das ebenfalls in der Mitte seiner vorderen Kante eine Platte (3a) aufweist, während es an den beiden Seiten jeweils mit symmetrisch gegenüberliegenden Spannklauen (B) versehen ist, die dazu geeignet sind, auf im Wesentlichen gegenüberliegenden Seiten kräftig in den Stamm eines Baumes einzugreifen, der an die Frontplatte (3a) anschlägt nach Aktivierung entsprechender Hydraulikheber (14), die an dem kastenförmigen Gestell (3) angelenkt sind, wobei die Vorrichtung **dadurch gekennzeichnet ist, dass** jede der zuvor genannten Klauen (B) Folgendes umfasst:
- einen ersten Hebel (10), der etwa in der Mitte seiner Länge bezogen auf einen Zapfen mit vertikaler Achse (11) auf einer Seite des kastenförmigen Gestells (3) angelenkt ist und zusätzlich an seinem hinteren Ende bezogen auf einen Zapfen mit vertikaler Achse (13) am Schaft (14a) eines Hydraulikhebers (14) angelenkt ist, dessen Buchse (14b) ihrerseits bezogen auf einen Zapfen mit vertikaler Achse (15) an der hinteren Kante (3c) desselben kastenförmigen Gestells (3) angelenkt ist;
- einen zweiten Hebel (16) neben dem ersten Hebel (10), dessen hinteres Ende bezogen auf einen Zapfen mit vertikaler Achse (17) in einem Punkt des kastenförmigen Gestells (3) angelenkt ist, der auf den Punkt gefluchtet ist, in dem der mittlere Drehzapfen (11) des ersten Hebels (10) wirkt, wobei darüberhinaus vorgesehen ist, dass der zweite Hebel (16) so lang ist, dass sein vorderes Ende perfekt auf das vordere Ende des ersten Hebels (10) gefluchtet ist;
- eine Greifbacke (18), die hinten an den vorderen Enden der beiden nebeneinander liegenden Hebel (10, 16) mittels entsprechender Zapfen mit vertikaler Achse (19, 20) angelenkt ist, die ihrerseits im Wesentlichen nebeneinander gefluchtet sind.

2. Schüttelvorrichtung nach Anspruch 1, **dadurch gekennzeichnet, dass** der zweite Hebel (16) einer jeden Klaue (B) sich weiter innen bezogen auf die Mitte des kastenförmigen Gestells (3) und etwas weiter unten bezogen auf den danebenliegenden ersten Hebel (10) befindet.

3. Schüttelvorrichtung nach Anspruch 2, **dadurch gekennzeichnet, dass** der zweite Hebel (16) einer jeden Klaue (B) teilweise durch den darüber liegenden ersten Hebel (10) "verdeckt" wird.

4. Schüttelvorrichtung nach Anspruch 2, **dadurch gekennzeichnet, dass** der zweite Hebel (16) einer jeden Klaue (B) ein gebogenes Profil aufweist, dessen Höhlung zur Mitte des kastenförmigen Gestells (3) hin gerichtet ist.

5. Schüttelvorrichtung nach Anspruch 1, **dadurch gekennzeichnet, dass** der Drehzapfen (11) des ersten Hebels (10) und der Drehzapfen (17) des zweiten Hebels (16) an einem Fortsatz (3b) angebracht sind, der auf der entsprechenden Seite des kastenförmigen Gestells (3) übersteht.

6. Schüttelvorrichtung nach Anspruch 1, **dadurch gekennzeichnet, dass** der Zapfen (13), dembezüglich an jedem ersten Hebel (10) der Schaft (14a) des Hebers (14) angelenkt ist, an einer nach außen überstehenden Öse (12) angebracht ist, die am hinteren Ende des ersten Hebels (10) herausgearbeitet ist.

7. Schüttelvorrichtung nach Anspruch 1, **dadurch gekennzeichnet, dass** die Buchsen der beiden Heber (14) an demselben Zapfen mit vertikaler Achse (15) angelenkt sind.

8. Schüttelvorrichtung nach einem oder mehreren der vorstehenden Ansprüche, **dadurch gekennzeichnet, dass** jede ihrer Klauen (B) eine Gelenkstruktur besitzt, die einen ersten Abschnitt (180a) aufweist, der hinten mittels entsprechender Zapfen mit vertikaler Achse (11, 17) an den vorderen Enden der beiden Hebel (10, 16) angelenkt ist, sowie einen zweiten Abschnitt (180a), der mittels entsprechender Zapfen mit vertikaler Achse (21, 22) auf der Vorderseite des ersten Abschnitts angelenkt ist und sich nach Betätigung eines zwischen dem ersten (180a) und dem zweiten Abschnitt (180b) der Gelenkbacke (180) eingefügten Hydraulikhebers (23) um circa 90° nach innen drehen kann.

9. Schüttelvorrichtung nach Anspruch 8, **dadurch gekennzeichnet, dass** die Buchse (23b) des Hydraulikhebers (23) am ersten Abschnitt (180a) der Backe (180) an dem Zapfen mit vertikaler Achse (19) angelenkt ist und der entsprechende Schaft (23a) am zweiten Abschnitt (180b) der selben Backe (180) am Zapfen mit vertikaler Achse (21) angelenkt ist.

## Revendications

1. Dispositif pour secouer les arbres aux fins de cueillir les fruits qui pendent, du type comprenant un châssis en forme de boitier (3), soutenu horizontalement par des supports d'amortissement (4), au-dessus duquel un actuateur (5) est fixé, ledit actuateur étant destiné à entrainer en rotation un corps excentrique sous-jacent, logé dans le dit châssis en forme de boitier (3), qui présente de même, au centre de son bord frontal, une plaque (3a), tandis que sur les deux côtés il résulte doté de respectives branches de serrage (B), opposées de manière symétrique, aptes à interférer énergiquement et de côtés substantiellement opposés avec le tronc de l'arbre sur lequel la dite plaque frontale (3a) est posée, à la suite de l'activation de respectifs vérins hydrauliques (14) pivotés sur le dit châssis en forme de boitier (3), dispositif **caractérisé en ce que** chacune des dites branches (B) comprend :
- un premier levier (10) qui, à environ moitié de sa longueur, résulte pivoté, par rapport à un axe vertical (11), sur un côté du dit châssis en forme de boitier (3) et qui, en correspondance de son extrémité postérieure résulte ultérieurement pivoté, par rapport à un pivot à axe vertical (13), à la tige (14a) d'un vérin hydraulique (14), dont la chemise (14b) résulte à son tour pivotée, par rapport à un pivot à axe vertical (15), en correspondance du bord postérieur (3c) du dit châssis en forme de boitier (3) ;
- un second levier (16), juxtaposé au premier (10), dont l'extrémité postérieure résulte pivotée par rapport à un pivot à axe vertical (17), sur un point du châssis en forme de boitier (3) qui résulte aligné avec le point sur lequel travaille le dit pivot médian de pivotement (11) du dit premier levier (10), étant par ailleurs prévu que la longueur de ce deuxième levier (16) soit telle que son extrémité antérieure résulte parfaitement alignée avec l'extrémité antérieure du dit premier levier (10) ;
- une mâchoire de prise (18) qui résulte pivotée postérieurement aux extrémités antérieures des dits deux leviers juxtaposés (10, 16), moyennant des respectifs pivots à axe vertical (19, 20) qui résultent à leur tour substantiellement alignés côte à côte.

2. Dispositif pour secouer les arbres selon la revendication 1, **caractérisé en ce que** le second levier (16) de chacune des dites branches (B) occupe une position plus interne, par rapport au centre du châssis en forme de boitier (3), et à une cote légèrement plus basse par rapport au premier levier (10) adjacent.

3. Dispositif pour secouer les arbres selon la revendication 2, **caractérisé en ce que** le dit second levier (16) de chacune des dites branches (B) résulte partiellement "couvert" par le respectif premier levier (10) sus-jacent.

4. Dispositif pour secouer les arbres selon la revendication 2, **caractérisé en ce que** le second levier (16) de chacune des dites branches (B) adopte un profil courbé dont la concavité résulte tournée vers le centre du châssis en forme de boitier (3).

5. Dispositif pour secouer les arbres selon la revendication 1, **caractérisé en ce que** le pivot de pivotement (11) du premier levier (10) et le pivot de pivotement (17) du second levier (16) sont appliqués en correspondance d'un appendice (3b) qui déborde sur le côté respectif du châssis en forme de boitier (3).

6. Dispositif pour secouer les arbres selon la revendication 1, **caractérisé en ce que** le pivot (13) par rapport auquel, sur chaque premier levier (10), la tige (14a) du vérin (14) est pivotée, résulte appliqué en correspondance d'une oreille (12) qui déborde vers l'externe, réalisée sur l'extrémité postérieure de ce même premier levier (10).

7. Dispositif pour secouer les arbres selon la revendication 1, **caractérisé en ce que** les chemises des dits deux vérins (14) résultent pivotées à un même pivot à axe vertical (15).

8. Dispositif pour secouer les arbres selon l'une ou plusieurs des revendications précédentes, **caractérisé en ce que** chacune des ses dites branches (B) adopte une structure articulée, dans laquelle on peut identifier un premier segment (180a), pivoté postérieurement aux extrémités antérieures des dits deux leviers (10, 16) moyennant des respectifs pivots à axe vertical (11, 17), ainsi qu'un second segment (180a) pivoté sur la façade du premier moyennant des respectifs pivots à axe vertical (21, 22), avec possibilité de tourner vers l'intérieur d'environ 90° à la suite de l'activation d'un vérin hydraulique (23) interposé entre ce premier (180a) et ce second (180b) segment de cette mâchoire articulée (180).

9. Dispositif pour secouer les arbres selon la revendication 8, **caractérisé en ce que** la chemise (23b) du dit vérin hydraulique (23) résulte pivotée au premier segment (180a) de la mâchoire (180) en correspondance du dit pivot à axe vertical (19) et que la tige respective (23a) résulte pivotée au second segment (180b) de la même mâchoire (180) en correspondance du dit pivot à axe vertical (21).
